# EUROPEAN PATENT APPLICATION

(11) **EP 1 742 170 A1**
(43) Date of publication of application: **10.01.2007**
(21) Application number: 06466005.3
(22) Date of filing: 19.06.2006
(51) Int. Cl.: G06K 17/00

(54) **Method for recognising mobile objects**

(30) Priority: 23.06.2005 CZ 20050408
(71) Applicant: Telematix Services, a.s., 180 00 Praha 8 (CZ); Siemens s.r.o., 160 00 Praha 6 (CZ)
(72) Inventor: Svítek, Miroslav, 339 01 Klatovy 4 (CZ); Repa, David, 196 00 Praha 9 (CZ)
(74) Representative: Spacek, Jindrich

(57) **Abstract**

Method for recognising mobile objects (3), in particular for the traffic investigation and marketing investigation performance, payments monitoring, statistical investigations with mobile objects (3), in particular on the traffic and commercial infrastructure of towns, regions and countries through the use of mobile units (4) as for example mobile phones, vehicle units for electronic toll collection and other radio communication units that are used in connection with mobile objects (3), which is specific in that the universal units (2) for detection of mobile objects (3) will be installed in chosen geographically specified localities (1) and that these universal units (2) transmit radio signals (21) over a limited range and that within that limited range the radio signals (21) continually or periodically trigger the mobile units (4) on the mobile objects (3) to transmit radio codes (22) that are characteristic for that particular mobile units (4), whereupon the response radio codes (22) received by the universal units (2) enhanced with time and position information of the corresponding universal unit (2), as well as with aerial directionality information or, potentially, with other reference information as for example heat, infrared radiation, or noise emitted by the mobile object (3), or ambient emission grade, mobile object (3) speed or weight and the like and subsequently, and the codes (22) including added reference information are sent by the universal units (2) continually, or on request, in the form of specific data messages (23) to at least one centre (5) for processing the information of the detected mobile objects (3), which is available in that particular locality and which compiles received specific data messages (23) and then completes them by supplementing information in the form of excerpts from the geographical maps, economic and sociological information and historical data base of statistics in the particular locality, non-recurring external information about mobile objects (3) subscription and the like, and which will be, as an on-line service selectively transferred with said added information to particular customers (8) such as infrastructure administrator, state administration, regional administration, carriers, mobile networks operators (9) and the like.

## Description

### Technical Field

The present invention relates to mobile object recognition, in particular for traffic investigation and marketing investigation performance, payments monitoring, statistical investigations with mobile objects, in particular on the traffic and commercial infrastructure of towns, regions and countries through the use of mobile units, for example mobile phones, vehicle units for the electronic toll collection and other radio communication devices that are used in connection with mobile objects, for which new services for different customers can be provided independently from the mobile network operators, for example: surveying the attendance at supermarkets, passenger numbers in public transport, attendance to a geographically specific event (demonstrations, strikes and the like), investigation of the intensity and the extent of utilization of the traffic infrastructure, supervising the payments for public transport or checking timetable schedules, supervising the payments for utilization of the traffic infrastructure, vehicle category identification and the like, without compromising any private data contained in the user's mobile unit.

### Background Art

The mobile objects detection has been resolved by many different ways. For example the most important problem with road traffic systems development is its control and coordination depending on its current condition. There are several methods how to control, regulate, and plan traffic. However, all this depends on input information. Today these are acquired by single-purpose individually developed traffic sensor systems based on different physical methods, for example the induction loop method, infrared detection, video detection, and the like. The common negative feature of any information acquired in such a way is its cost. A sensor needs to be installed in the area to be examined, acquired information needs to be transmitted and processed in a processing centre. Thus, the inevitable area communication modification, installation of particular telecommunication transmission points and networks and the construction of information processing centres are to be considered as negative features. The expense of such solutions slows down the widespread application of badly needed dynamic methods for planning and controlling the surface communications traffic and acquiring other subsequent information for external customers. Till now, the background art inhibits the adaptation or acquisition of information that would be suitable for controlling, regulating and planning the traffic which would require less initial investment. Similar conditions can be found in all applications for the monitoring of mobile units in different sectors of human activity.

Today, it is however well-known that the information and overviews, for example of the density and direction of vehicle units flow or of the transported freight, or movement and number of persons, are in fact hidden in other systems, in particular in the communication systems which are designated for example with abbreviation GSM (Global System for Mobile Communications), UMTS (Universal Mobile Telephone Standard), GPS (Global Positioning System) etc. Here, the system operators can localize a mobile unit of mobile objects, including persons, vehicles and other participants in the mobile communication systems, identify the direction of their movement, the time, and the density. It is only necessary, by means of an advanced device with its own intelligence to minimize errors and to adapt the acquired information to the required level, which would be suitable for example for planning and active decision making on surface communication administration, state administration authorities, traffic operators, and other specific customers and for commercial exploitation, which today is indispensable for each system.

An important step towards gaining access to this information was the creation of a universal detector according to the Czech utility model No. 11812. The effect of this solution is based in particular on the localization of the position of the mobile units as far as the geodetic position of the traffic communication is concerned, and further, concerning the error rate reduction, by implementing own intelligence into the data treatment process in the form of an independent block, which enhances the information with the time and direction of movement data whilst it is being stored. For specified customer requirements (surface communication administration, state administration authorities, traffic operators, and other particular customers, and the like), the universal detector can provide a level of knowledge from a data base and offer a service through a special custom service block which can be completed with a communication block resulting in an open telecommunication link to the user or customer for access to services that can be used in on-line control or for statistical evaluation with voice or image (a chart for example) or multifunction outputs. The universal detector system is completed with an independent commercial server providing access to the specific services for any communication means required by the user. For example, the system provides information about the evolution of the traffic situation in a specified region, real time or over any specified time interval, and can be enhanced with further services related to the traffic process, for example the recommendation of a diversion route or similar.

Nevertheless, the known methods for detection of mobile objects, even if using the aforementioned universal detector, are based on the principle of data processing by the operator of the specific mobile communication network so that this operator exclusively obtains information about the position or parameters of each mobile unit in its mobile communication network. This method presents several drawbacks:
a) no possibility of processing the data of more than one mobile communication network operator (the link is restricted to one exclusive operator),
b) possible misuse of the information by mobile communication network operator that has not only got the information concerning the position of all mobile units, but also has information concerning the user's personal data, too,
c) necessity of centralized data processing from all mobile units increases the data processing cost, not including complementary software for base stations,
d) with the centralized processing, some information, as for example the exact position of the mobile unit interception can not be identified with the required accuracy, for example in the case when the mobile unit user gets in a car or when the mobile unit user enters the protected area and the like.

### Nature of the Invention

The object of the present invention is to eliminate the disadvantages of existing mobile object detection systems, in particular to reduce the system cost, to increase localization accuracy of mobile units, to preserve the protection of mobile units users personal data and the like, whereby this specific goal is achieved by the use of this method for recognising the mobile objects, in particular for traffic investigation and marketing investigation performance, payments monitoring, and statistical investigations with mobile objects, in particular on the traffic and commercial infrastructure of towns, regions and countries through the use of mobile units as for example mobile phones, vehicle units for electronic toll collection and other radio communication units that are used in connection with mobile objects, which is specific in that the universal units for mobile objects detection will be installed in chosen geographically specified localities and that these detectors transmit radio signals covering a limited range and, within that limited range, the radio signals continually or periodically cause the mobile units in the mobile objects to transmit radio codes that are characteristic for this particular mobile unit, whereby the radio response codes received by the universal units will be completed by adding time, universal mobile unit position, and aerial directionality information or, potentially, with other reference information as for example heat, infrared radiation, or noise emitted by the mobile object, or ambient emission grade, mobile object speed or weight and the like and subsequently, the codes including added reference information are sent by universal units continually or on request in the form of specific data messages to at least one centre for processing of the detected mobile objects, which is available in the given locality and which compiles the specifically received messages and completes them by supplementing information in the form of excerpts from the geographical maps, economic and sociological information and historical data base of statistics related to the given locality, non-recurring external information about mobile objects subscription and the like, and which will be as an on-line service selectively transferred with said added information to particular customers as infrastructure administrator, state administration, regional administration, carriers, mobile networks operators and the like.

### Description of the Figures in the Drawings

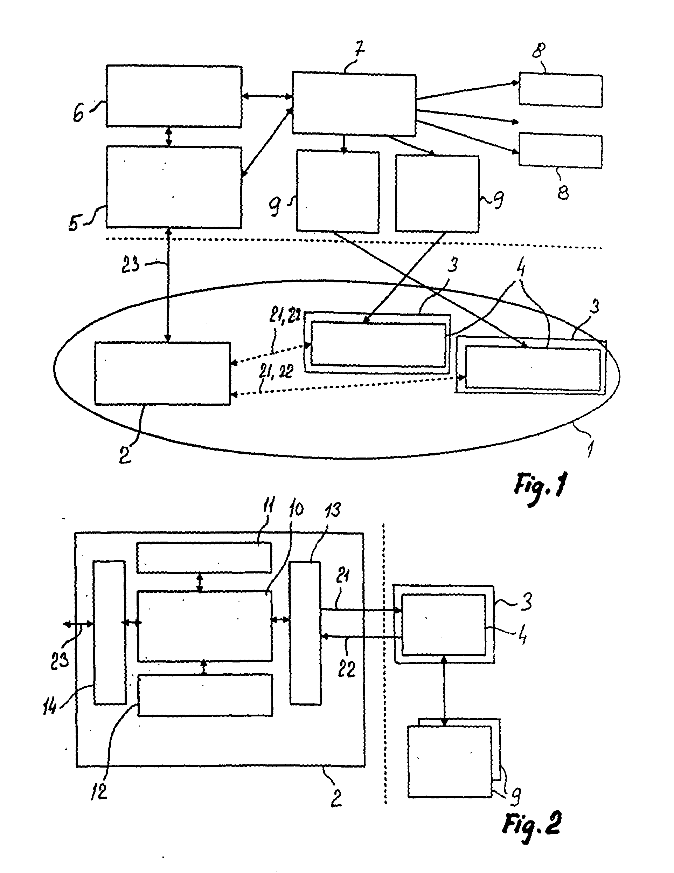

Further benefits and effects of the present invention will be further explained when consideration is given to the following drawing thereof wherein Fig. 1 illustrates the block diagram of a communication network example that is constituted between a set of mobile units in the selected locality which is within range of the universal unit for the detection of mobile objects including its connection to the centre for processing of the detected mobile objects aimed at further adaptation and transfer of specific data messages from the universal unit for a specified purpose, Fig. 2 illustrates the block diagram of the basic structure of the equipment of the universal unit for the detection of mobile objects.

### Examples of Carrying Out the Invention

Method for recognising the mobile objects **3,** in particular for traffic investigation and marketing investigation performance, payments monitoring, and statistical investigations with mobile objects **3,** in particular on the traffic and commercial infrastructure of towns, regions and countries through the use of user mobile units **4** as for example mobile phones, vehicle units for electronic toll collection and other radio communication units that are used in connection with mobile objects **3,** which is specific (Fig. 1) in that the universal units **2** for the detection of mobile objects **3** or the mobile units **4** will be installed in chosen geographically specified localities **1** and in that the universal units **2** transmit limited-range radio signals **21** and these radio signals **21** continually or periodically force the mobile units **4** on the mobile objects **3** to transmit radio codes **22** that are characteristic for that particular mobile units **4.**

Then there will be the response radio codes **22** received by the universal units **2** enhanced with time and position information of the corresponding universal unit **2,** as well as with aerial directionality information or, potentially, with other reference information as for example heat, infrared radiation, or noise emitted by the mobile object **3,** or ambient emission grade, mobile object **3** speed or weight and the like and subsequently, and the codes **22** including added reference information are sent by the universal units **2** continually, or on request, in the form of specific data messages **23** to at least one centre **5** for processing the information of the detected mobile objects **3,** which is available in that particular locality. In this centre **5** the received specific data messages **23** are compiled and completed by supplementing data base **6** information in the form of excerpts from the geographical maps, economic and sociological information and historical data base of statistics in the particular locality, and with non-recurring external information about mobile objects **3** subscription and the like, and which will be, through the service operator **7** selectively transferred as an on-line service with said added information to the particular customers **8** as for example infrastructure administrator, state administration, regional administration, carriers, mobile networks operators **9** and the like.

The base for carrying out the method according to the invention is the said universal unit **2** for the detection of mobile objects **3** (Fig. 2), which transmits special radio signals **21** that force the mobile units **4** located within its transmission range to respond to these radio signals **21** by emitting the radio code **22** that is characteristic for each particular user mobile unit **4,** or for each particular mobile object **3.** For this purpose, the universal unit **2** for the detection of mobile objects **3** is equipped for example with a module **10** for processing the mobile unit **4** information, further with a local data bases module **11** and reference information module **12.** The said system represents a unit with an inherent intelligence, which can be controlled by a data base, and which software can be adapted from the centre **5** for processing of detected mobile objects **3**. The link of the universal unit **2** for the detection of mobile objects **3** with the mobile units **4** is provided by the very first communication module **13**, whereas the link of the universal unit **2** with the centre **5** for processing of detected mobile objects **3** is provided by the second communication module **14.**

Existing identifiers of the user mobile units **4** or mobile objects **3** are used for executing the detection method according to present invention, particularly with respect to the condition of today's mobile network, in particular to the GSM mobile network, because of its wide-spread use in Europe and with regard to the possibility of analyzing large amounts of statistical samples which provide minimum result dispersion. Similarly, other mobile network types can be used, as for example UMTS (Universal Mobile Telephone Standard), CDMA (Code Division Multiple Access) etc.

The monitored active mobile unit **4** of the mobile object **3** or the user unit stays for most of the time in the IDLE mode, i.e. it does not use the operation equipment of the mobile network (voice and data flux), nevertheless, when moving (roaming, signal change or potential signal loss) it continually evaluates the ideal cell for potential service communication. Currently, the exact identification in the GSM network is defined by IMEI (serial HW terminal number), IMSI (permanent user identification number) and TMSI (temporary user identification number). In the interests of maximum security of the mobile network, the communication and identification of the mobile unit **4** of mobile object **3** in the GSM network is carried out, for example, by an assigned TMSI, which is modified by a random algorithm method, or when the area changes from the one the TMSI has been defined (after changing the area, a new identification number is assigned). Thus, a set of numbers is concerned and these numbers are changing permanently so that they have no meaning for the identification of the mobile unit **4**. Thus, any misuse of the personal data of the mobile unit **4** user is not possible.

However, as far the marketing and traffic investigations are concerned, the said information represents a very valuable element because it clearly identifies the statistically monitored mobile object **3** during a specified time or within a specified area. If the time and position data of the captured mobile unit **4** is added to the identification numbers, the movement of mobile units **4** on monitored traffic and commercial infrastructure of towns, regions and countries in a locality **1** of operation of the universal unit **2** can be statistically evaluated etc. If there is a possibility to track the continued relationship of the original and existing TMSI 1, TMSI 2, etc. identifiers, the marketing and traffic investigation area could cover several hundreds of kilometres of territory that could correspond to an entire region or country.
One of possible embodiment of the universal unit **2** for the detection of mobile objects **3** is based on the principle of transmitting via the network code at a given frequency and with communication enabled, whereby this setting causes the mobile unit **4** to communicate with and monitor the BCCH (Broadcast control channel) of the particular cell. When the signal intensity exceeds the intensity of the currently assigned cell, the mobile unit **4** starts so-called 'location update process', i.e. a standardized signalling process whereby, in the initial phase, it transmits its TMSI code (typically for the LU [Location Update] enabling). At this moment, the whole communication can be closed and the acquired information processed and stored or sent to the centre **5** for processing of the detected mobile objects **3** together with time, position, or other attributed information.

The received code is completed in the universal unit **2** for the detection of mobile objects **3** with time and position information concerning the corresponding universal unit **2** for the detection of mobile objects 3, and aerial directionality information or, potentially, with other reference information as for example heat, infrared radiation, or noise emitted by the mobile object **3**, or ambient emission grade, mobile object speed or weight and the like and subsequently, the code is sent to the centre **5** for processing of detected mobile objects 3, where the received information is compared with information received from other differently located universal units **2** for the detection of mobile objects **3** so that, on the basis of processed data, the service operator **7** could provide special services as for example marketing investigations on commercial infrastructure of towns, regions and countries etc., traffic investigations such as traffic flow directions, their intensity, public transport means utilization extent and timetable schedules, and the like.

### Industrial Applicability

### I. Statistical and marketing investigations

The universal units **2** for the detection of mobile objects **3** will be located at traffic, commercial, urban and other infrastructures so that their radio emitting range and placement correspond to basic movement flows of vehicles, inhabitants, etc. The particular users are equipped with active mobile units **4**, for example mobile phones (statistical research is made so that the use of mobile phones by each inhabitant is not necessary). If the user of the mobile unit **4** gets closer to the universal unit **2** for the detection of mobile objects **3,** then the mobile unit **4** of the user (mobile phone) is forced by the universal unit **2** for the detection of mobile objects **3** to transmit a code that is characteristic for this particular mobile unit **4**. Information acquired from the mobile unit **4** of the user (mobile phone) will be completed in the universal unit **2** for detection of mobile objects **3** by adding further information from the reference information module **12**, as for example position or time and the like, whereupon the complete specific data message **23** will be sent via the centre **5** for processing of detected mobile objects **3** to the service operator **7** that creates, after the information coming from all universal units **2** for the detection of mobile objects **3** has been compared, an on-line model of movement of vehicles, inhabitants and the like, and this model can be updated at any time and transferred with supplementing information to the given customer **8**, for example to the statistical and marketing investigations researcher that is accredited by the infrastructure administrators, state administration, regional administration, carriers, mobile networks operators 9 and the like, or directly but selectively to said subjects, and the like.

### II. Systems for monitoring fee-paying services by using user mobile unit (mobile phone)

In applications based, for example, on the possibility of paying for a specified charged service by using mobile phones (as for example the payment for admission fee via mobile phone, or the public transport ticket, etc.) a problem occurs on how to check (monitor) whether the user has paid for and consequently whether he should be admitted to the premises or to the vehicle and the like and which users won't be admitted until it is paid for. The universal unit **2** for the detection of mobile objects **3** clearly identifies the mobile unit **4** (mobile phone) of the user before admission and sends, after initiating said mobile unit **4,** the code of the user mobile unit **4** to the centre **5** for the processing of detected mobile objects **3,** which compares this code with the data base of users that have already paid. If the user with this particular mobile unit **4** (mobile phone) has paid, he will be admitted to the premises or to the vehicle and the like. Such a concept of automatic monitoring allows a rapid flow of large numbers of users of the mobile unit **4** into premises, onto public transport vehicles and the like. The universal unit **2** for the detection of mobile objects **3** can be used for electronic toll collecting and monitoring, whereby only the codes of mobile units **4** (vehicle units for electronic toll collecting) are registered at the control gates and in this way generating the information about each vehicle that goes through.

### III. Secured access to guarded areas, automatic teller machines and the like

The user who demands access to guarded areas, automatic teller machines and the like, first has to dial a special code on his mobile unit **4** (mobile phone), and he has to stay on the selected place that is "visible" by the universal unit **2** for the detection of mobile objects **3**. The centre **5** for processing of the detected mobile objects **3** compares whether the received special code is correct so that access can be granted to the user. There is a possibility to find out by means of the universal unit **2** for the detection of mobile objects **3** whether the code was generated by the mobile unit **4** that really belongs to the particular user and not by a false unit (the registration of mobile units **4** of users was done and stored into the system earlier). Such a system will be appreciated in particular when entrance of vehicles is concerned, which are equipped with mobile units **4** that are connected with the vehicle inseparably.

### IV. Verification of payment in public transport made by users mobile unit

As far as the public transport systems are concerned fare collection by means of a mobile unit **4** (mobile phone) is very interesting. Nevertheless, a serious problem of such a solution is the fact that the checker, conductor or whoever has to identify and verify that the user has or has not paid the fare. The checker or conductor has a list of travellers that pay by means of a mobile unit **4** (i.e. by user mobile phone), or the codes of respective mobile units **4** and the station of departure and destination information for which the fare had been paid. The universal unit **2** for the detection of mobile objects **3** can be completed with an automatic position identification system of the universal unit **2**, for example GPS or GSM systems, etc., and its coverage range can be reduced and oriented on only one mobile unit **4** of the user. The checker or conductor etc. can consequently be automatically directed (without knowledge of the user) on its mobile unit **4** and verify if the fare has been paid, if the route segment corresponds to the paid fare and the like. This method can be used in all kinds of public transport as road transport, railway transport, underground and the like.

With these mobile objects **3,** the communication between the universal unit **2** for the detection of mobile objects **3** and mobile units **4** will be secured through a definite, safe and reliable method in order to have the information obtained by means of the universal unit **2** for the detection of mobile objects **3** evident enough for example for collection of the charge for transiting a defined infrastructure, use of public transport vehicles and other services connected with the electronic payment system.

## Claims

1. Method for recognising mobile objects, in particular for the traffic investigation and marketing investigation performance, payments monitoring, statistical investigations with mobile objects, in particular on the traffic and commercial infrastructure of towns, regions and countries through the use of mobile units as for example mobile phones, vehicle units for electronic toll collection and other radio communication units that are used in connection with mobile objects, which is **characterised in that** the universal units (2) for detection of mobile objects (3) will be installed in chosen geographically specified localities (1) and that these universal units (2) transmit radio signals (21) over a limited range and that within that limited range the radio signals (21) continually or periodically trigger the mobile units (4) on the mobile objects (3) to transmit radio codes (22) that are characteristic for that particular mobile units (4), whereupon the response radio codes (22) received by the universal units (2) enhanced with time and position information of the corresponding universal unit (2), as well as with aerial directionality information or, potentially, with other reference information as for example heat, infrared radiation, or noise emitted by the mobile object (3), or ambient emission grade, mobile object (3) speed or weight and the like and subsequently, and the codes (22) including added reference information are sent by the universal units (2) continually, or on request, in the form of specific data messages (23) to at least one centre (5) for processing the information of the detected mobile objects (3), which is available **in that** particular locality and which compiles received specific data messages (23) and then completes them by supplementing information in the form of excerpts from the geographical maps, economic and sociological information and historical data base of statistics in the particular locality, non-recurring external information about mobile objects (3) subscription and the like, and which will be, as an on-line service selectively transferred with said added information to particular customers (8) such as infrastructure administrator, state administration, regional administration, carriers, mobile networks operators (9) and the like.
